# EUROPÄISCHE PATENTSCHRIFT

(11) **EP 3 995 285 B1**
(45) Veröffentlichungstag und Bekanntmachung des Hinweises auf die Patenterteilung: **04.10.2023**
(21) Anmeldenummer: 21206577.5
(22) Anmeldetag: 04.11.2021
(51) Int. Cl.: B29C 49/48, B29C 49/06, B29C 49/12, B29K 67/00, B29L 31/00

(54) **BLASFORMMASCHINE MIT TEMPERIERTER BODENFORM**
BLOW MOULDING MACHINE WITH TEMPERED BOTTOM MOULD
MACHINE À MOULER PAR SOUFFLAGE POURVUE DE MOULE DE FOND THERMORÉGULÉ

(30) Priorität: 09.11.2020 DE 102020129415
(43) Veröffentlichungstag der Anmeldung: 11.05.2022
(73) Patentinhaber: Krones AG, 93073 Neutraubling (DE)
(72) Erfinder: Senn, Konrad, 93073 Neutraubling (DE); Pense, Andreas, 93073 Neutraubling (DE); Kulzer, Markus, 93073 Neutraubling (DE)
(74) Vertreter: Hannke Bittner & Partner mbB Regensburg

(56) Entgegenhaltungen:
- FR-A1- 3 088 234
- US-A1- 2011 223 275
- US-A1- 2016 325 483
- US-A1- 2020 346 392

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik seit Langem bekannt. Dabei werden erwärmte Kunststoffvorformlinge in Blasformen eingegeben und innerhalb dieser Blasformen durch Beaufschlagung mit einem fließfähigen Medium, zumeist Blasluft, in jüngerer Zeit jedoch teilweise auch einem flüssigen Produkt zu Kunststoffflaschen beziehungsweise Kunststoffbehältnissen expandiert.

Die Dokumente US2016/325483A1, US2020/346392A1, FR3088234A1 und US2011/223275A1 beschreiben derartige Umformvorrichtungen und Verfahren zum Umformen von Vorformlinge.

Diese Blasformen weisen dabei üblicherweise Seitenteile sowie ein Bodenteil auf, welche geschlossen werden können und so den Raum ausbilden, innerhalb dessen der Kunststoffvorformling expandiert wird.

Dabei ist es im Stand der Technik auch bekannt, Teile dieser Blasform, wie beispielsweise die Seitenteile oder insbesondere auch das Bodenteil, welches zur Ausformung des Bodens des Behältnisses dient zu temperieren, d. h. zu erwärmen oder zu kühlen. Dazu kann es hilfreich sein, eine einheitliche Temperatur des Bodenteils auch über eine längere Verfahrenszeit hinweg beizubehalten.

Um diese Temperierung zu erreichen ist es aus dem Stand der Technik bekannt, dass beispielsweise an oder in einem Bodenteil ein Kanal angeordnet ist, durch den ein fließfähiges Medium geleitet wird, welches die besagte Temperierung ermöglicht.

Derartige Bodenteile sind im Stand der Technik üblicherweise einteilige Bauteile, welche eine eingefräste Spirale aufweisen, durch welche ein Temperiermittel und insbesondere ein Kühlmittel über eine Öffnung einströmt und über eine weitere Öffnung wieder ausströmt. Durch das Durchfließen dieser Spirale wird in der gesamten Bodentasse Wärmeenergie entzogen und über das Kühlmittel abtransportiert. Die Einströmung erfolgt dabei im Stand der Technik teilweise direkt im Zentrum des Bodens. Dabei weist diese Spirale im Stand der Technik eine ebene Oberfläche auf.

Durch immer höhere Anforderungen an die Maschinenausstoßleistungen wird ein immer besserer Wärmetransport im Boden verfahrenstechnisch erforderlich. Die im Stand der Technik verwendete Spiralstruktur kommt dabei an ihre Grenzen und erreicht in vielen Fällen nicht mehr aus, um einen stabilen Prozess zu garantieren. Die Spirale ist aufgrund ihrer einfachen Kontur nicht immer geeignet, um eine Kühlung insbesondere der Innenoberfläche, an welche sich der Kunststoffvorformling beziehungsweise das Kunststoffmaterial anlegt, zu gewährleisten. Auf diese Weise kann bei hohen Maschinenleistungen die Kühlfunktion insbesondere an dem für die Behältnisse besonders wesentlichen Boden nicht erreicht werden.

Der vorliegenden Erfindung liegt daher die Aufgabe zugrunde, eine Bodentasse beziehungsweise ein Bodenteil zu schaffen, welches eine verbesserte Temperierwirkung und insbesondere Kühlwirkung des einzubringenden Kunststoffvorformlings erlaubt. Daneben soll erfindungsgemäß eine Vorrichtung zur Verfügung gestellt werden, welche eine höhere Maschinenwirkung erlaubt. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Umformungsvorrichtung zum Umformen von Kunststoffvorformlingen zu Kunststoffbehältnissen weist wenigstens eine Umformungsstation auf, welche die Kunststoffvorformlinge durch Beaufschlagung mit einem fließfähigen Medium zu den Kunststoffbehältnissen (beispielsweise Kunststoffflaschen) umformt, wobei die Umformungsstation eine Blasform aufweist, welche einen Hohlraum ausbildet, innerhalb dessen die Kunststoffvorformlinge zu den Kunststoffbehältnissen umformbar und/oder ausformbar sind und diese Blasform ein Bodenteil aufweist, welches eine Innenkontur aufweist und/oder ausbildet, welche einen Boden der Behältnisse ausformt. Dabei weist dieses Bodenteil wenigstens einen Kanal zum Leiten eines Temperiermediums zum Temperieren des Bodenteils auf.

Erfindungsgemäß ist dieser Kanal an einen Verlauf der Innenkontur angepasst und/oder der Kanal weist an seiner dem Temperiermedium zugewandtem Innenoberfläche Strukturen auf und/oder Querschnittsveränderungen, welche die Strömung des Temperiermediums durch den Kanal hindurch beeinflussen.

Es werden daher zwei Maßnahmen vorgeschlagen, die jedoch jeweils dazu dienen, eine effizientere Temperierung und insbesondere Kühlung des Bodenteils zu erreichen. Bei der einen Maßnahme wird der Kanal beziehungsweise dessen Verlauf auch an den Verlauf der Innenkontur angepasst. Auf diese Weise kann der Abstand zwischen dem Kanal und der Innenkontur verringert werden und auf diese Weise die Temperierwirkung erhöht werden. Daneben kann auf diese Weise eine gleichmäßige Verteilung der Temperierung auf die Bodengeometrie ermöglicht werden. Bei der zweiten Maßnahme werden bewusst Strukturen beziehungsweise Querschnittsveränderungen ausgebildet, welche bewirken, dass in den vorgegebenen Bereichen des Bodenteils eine stärkere Temperierung und/oder ein stärkerer Temperaturaustausch stattfindet.

Bei einer bevorzugten Ausführungsform folgt der Kanal im Wesentlichen einer Topografie der Innenoberfläche des Bodenteils. Die Innenkontur bzw. Innenoberfläche des Bodenteils ist bevorzugt ein Negativ des Bodens des herzustellenden Behältnisses.

Bei einer weiteren vorteilhaften Ausführungsform weist die Umformungsstation einen stangenartigen Körper, insbesondere eine sogenannte Reckstange auf, welche in die Kunststoffvorformlinge einführbar ist, um diese in ihrer Längsrichtung zu dehnen.

Bei einer weiteren bevorzugten Ausführungsform weist die Umformungsstation eine Beaufschlagungseinrichtung auf, welche die Kunststoffvorformlinge mit einem fließfähigen und insbesondere einem gasförmigen Medium beaufschlagt, um diese zu expandieren. Dabei handelt es sich bevorzugt bei dieser Beaufschlagungseinrichtung um eine sogenannte Blasdüse, welche an eine Mündung der zu expandierenden Kunststoffvorformlinge anlegbar ist.

Bevorzugt weist die Vorrichtung eine Transporteinrichtung zum Transportieren der Kunststoffbehältnisse auf, insbesondere eine Transporteinrichtung, welche die Kunststoffvorformlinge auch während deren Umformung transportiert.

Bei einer weiteren vorteilhaften Ausführungsform weist die Vorrichtung einen bewegbaren und insbesondere einen drehbaren Träger (der bevorzugt Bestandteil dieser Transporteinrichtung ist) auf, an dem eine Vielzahl der hier beschriebenen Umformungsstationen angeordnet sind. Bei dieser Ausgestaltung findet bevorzugt die Umformung der Kunststoffvorformlinge zu den Kunststoffbehältnissen während eines Transports dieser Kunststoffvorformlinge statt.

Bei einer bevorzugten Ausführungsform weist das Bodenteil einen Zulauf für das Temperiermedium und/oder einen Ablauf für das Temperiermedium auf. Bevorzugt sind dabei dieser Zulauf und dieser Ablauf von unterschiedlichen Positionen des Bodenteils insbesondere an unterschiedlichen Positionen in einer radialen Richtung des Bodenteils angeordnet. Dabei ist es möglich, dass der Zulauf und/oder der Ablauf in einem Zentrum des Bodenteils angeordnet ist.

Bevorzugt handelt es sich bei dem hier beschriebenen Kanal um einen in seiner Umfangsrichtung geschlossenen Kanal, also insbesondere einen Kanal, der in der Art einer Rohrleitung ausgebildet ist. Dieser kann beispielsweise ein kreisförmiges Profil aber auch ein hier von abweichendes Profil aufweisen. Bevorzugt handelt es sich bei der oben beschriebenen Temperierung um eine Kühlung des Bodenteils.

Bei einer bevorzugten Ausführungsform ist das Bodenteil aus einer Legierung und insbesondere einer Knetlegierung hergestellt und insbesondere aus einer Aluminium-Knetlegierung. Bevorzugt ist das Bodenteil einteilig ausgebildet, es wäre jedoch auch eine zweiteilige Ausgestaltung denkbar.

Bevorzugt findet ein im Wesentlichen kontinuierlicher Temperiermittelfluss (bzw. Temperiermedium)- beziehungsweise Kühlmittelfluss innerhalb der Kanäle statt. Bei einer bevorzugten Ausführungsform wird daher eine ein- oder mehrteilige Bodenform oder ein Bodenteil vorgeschlagen, deren Kühlung insbesondere stetig dicht an der Innenkontur beziehungsweise der Form der Bodenkontur folgt und somit auch in verfahrenstechnisch kritischen Bereichen eine bessere Temperier- und insbesondere Kühlfunktion (denkbar wäre auch eine Erwärmungsfunktion) erfüllt.

Bei einer bevorzugten Ausführungsform ist der Kanal wenigstens abschnittsweise spiralförmig ausgebildet. Dabei ist es möglich, dass ausgehend von einem Zufluss das Temperiermedium spiralförmig hin zu einem Abfluss, der beispielsweise im Zentrum des Bodenteils angeordnet sein kann, strömt. Bevorzugt ist dabei dieser spiralförmig ausgebildete Kanal nicht, wie im Stand der Technik bekannt als Spirale ausgebildet, welche in einer oder zwei Ebenen verläuft, sondern ist bevorzugt, wie oben erwähnt an eine Topografie der Innenkontur des Bodenteils angepasst.

Bei einer bevorzugten Ausführungsform folgt der Kanal, der insbesondere als spiralförmiger Kanal ausgebildet ist, der Bodengeometrie beziehungsweise der Innenkontur in einem definierten Abstand und folgt insbesondere stetig in einem definierten Abstand.

Wie erwähnt, weist bei einer Ausgestaltung die Spirale eine strukturierte Oberfläche auf, wobei mit der strukturierten Oberfläche insbesondere auch Vorsprünge und Verengungen an der Innenwand der Spiral beziehungsweise dem Kanal gemeint sind.

Bei einer weiteren bevorzugten Ausführungsform bildet die Spirale mehr als eine Umdrehung, bevorzugt mehr als zwei Umdrehungen und bevorzugt drei oder mehr Umdrehungen aus. Bei einer weiteren bevorzugten Ausführungsform bildet die Spirale weniger als zehn, bevorzugt weniger als acht und bevorzugt weniger als sieben Umdrehungen aus. Durch diese Wahl der Umdrehungen hat sich gezeigt, dass eine effiziente Kühlung des Bodenteils möglich ist. Bevorzugt windet sich die Spirale um einen geometrischen Mittelpunkt des Bodenteils und/oder eines Bereichs des Bodenteils, der auch den geometrischen Mittelpunkt des Bodens des Behältnisses ausbildet.

Bei einer weiteren bevorzugten Ausführungsform ist die Spirale durch Elemente und beispielsweise Stege in ihrem Strom unterbrochen. Auf diese Weise können Querschnittsverengungen und somit bevorzugt Turbulenzen erzeugt werden, die insbesondere an kritischen Bereichen eine effiziente Kühlung ermöglichen.

Weiterhin wäre es auch möglich, dass der Kanal beziehungsweise der spiralförmige Kanal an kritischen Stellen "Einschnürungen" des durchströmten Kanals beziehungsweise Durchbrüche aufweist, um gezielt eine Kühlwirkung zu platzieren.

Bei einer weiteren bevorzugten Ausführungsform weist der Kanal einen vorbestimmten Abstand zu der Innenkontur auf und/oder ein Verlauf des Kanals ist in einer Höhenrichtung des Bodenteils wenigstens abschnittsweise an einem Verlauf der Innenkontur angepasst. Auf diese Weise kann insgesamt ein geringerer Abstand zwischen der Innenkontur und dem Kanal geschaffen werden.

Bevorzugt weist der Kanal einen Abstand zu der Innenstruktur auf, der (insbesondere stets) kleiner ist als 10 mm, bevorzugt kleiner als 8 mm, bevorzugt kleiner als 6 mm und besonders bevorzugt kleiner als 4 mm. Bei einer weiteren bevorzugten Ausführungsform weist der Kanal zu der Innenstruktur einen Abstand auf, der (insbesondere stets) größer ist als 0,5 mm, bevorzugt größer als 1 mm und bevorzugt größer als 1,5 mm . Durch diese gewählten Abstände kann insgesamt die Kühlwirkung des Bodenteils (oder gegebenenfalls eine Erwärmungs- oder allgemein eine Temperierwirkung) erhöht werden. Auf der anderen Seite ist jedoch auf eine ausreichende Druckfestigkeit zu achten und auch der Aufwand bei der Fertigung, insbesondere eines Fräswerkzeugs zu berücksichtigen. Bevorzugt handelt es sich bei der Innenstruktur um eine gefräste Innenstruktur.

Bei der hier beschriebenen Ausführungsform ändert sich damit ein Höhenniveau des Kanals, wobei bevorzugt sind für diese Abstandsbetrachtungen diejenigen Bereiche des Kanals zu betrachten, die der Innenkontur am nächsten liegen. Es wäre auch denkbar, dass hier ein Querschnitt des Kanals endet und/oder die Begrenzungen des Kanals den Änderungen des Höhenniveaus der Innenkontur folgen.

Unter der Höhenrichtung des Bodenteils wird insbesondere diejenige Richtung verstanden, welche sich während der Expansion der Kunststoffvorformlinge in deren Längsrichtung erstreckt.

Bevorzugt weist der besagte Kanal stets im Wesentlichen den gleichen Abstand zu der Innenkontur auf, wobei hierunter insbesondere ein lokaler Abstand des Kanals zu der Innenkontur verstanden wird. Bevorzugt weicht der Abstand des Kanals von der Innenkontur des Bodenteils über seine gesamte Erstreckung um nicht mehr als 20 %, bevorzugt um nicht mehr als 15 % und bevorzugt um nicht mehr als 10 % von einem vorgegebenen Mittelwert ab.

Ausgenommen von diesen Abweichungen sind insbesondere solche Bereiche, in denen Entlüftungskanäle verlaufen, etwa Bereich, in denen die Füße des Behältnisses ausgebildet werden. In solchen Bereichen kann es nötig sein, die hier beschriebenen Kanäle um eine Entlüftung(-sleitung) herumzuführen. Ein Folgen der Bodenkontur ist erst nach solchen Bereichen wieder möglich.

Bei einer bevorzugten Ausführungsform sind die Strukturen als Vorsprünge und/oder Stege ausgebildet, welche in den Kanal reichen. So können derartige Stege beispielsweise zum Zwecke des Lenkens und/oder zur Vergrößerung der Kontaktoberflächen ausgebildet sein und/oder als Stützelemente der Formkontur.

So können beispielsweise dreieckige beziehungsweise zackenartige Vorsprünge vorgesehen sein, welche in den Kanal hineinreichen und insbesondere ausgehend von einer Innenwandung des Kanals in den Kanal hineinreichen. Durch diese Vorsprünge können, wie oben erwähnt, Turbulenzen des durch den Kanal tretenden fließfähigen Mediums erreicht werden. Bei einer weiteren vorteilhaften Ausgestaltung sind in den Kanälen Stege angeordnet. Dabei können gezielte Veränderungen der durchströmten Querschnittsfläche erreicht werden.

Bei einer bevorzugten Ausführungsform sind benachbart zu diesen Stegen und insbesondere unterhalb der Stege Ausnehmungen vorgesehen, wobei es sich insbesondere um Bohrungen handelt, die den Kühlmittelfluss herstellen beziehungsweise umlenken.

Bevorzugt weisen diese Bohrungen einen Durchmesser auf, der zwischen 2 mm und 10 mm, bevorzugt zwischen 3 mm und 8 mm und bevorzugt zwischen 4 mm und 6 mm liegt.

Besonders bevorzugt sind diese Stege oder allgemein diese Strukturen des Kanals unterhalb derjenigen Bereiche der Bodenform, welche kritisch oder besonders zu temperieren und insbesondere zu kühlen sind. Hierbei handelt es sich insbesondere um diejenigen Bereiche, welche in dem fertigen Behältnis sogenannte Zugbänder ausbilden. Diese Zugbänder müssen eine hohe Stabilität aufweisen und sind dabei bei der Herstellung der Kunststoffbehältnisse relativ kritisch.

Bei einer weiteren bevorzugten Ausführungsform weist der Kanal zumindest abschnittsweise Einschnürungen und Verengungen auf. Allgemein handelt es sich hierbei um sich ändernde Querschnitte. Diese sind insbesondere an solchen kritischen Stellen des Bodenteils vorgesehen, die besonders temperiert und insbesondere gekühlt werden müssen. In derartigen Bereichen, in denen der Kanalquerschnitt kleiner wird, kann besonders gut Wärme abtransportiert werden.

Bei einer weiteren bevorzugten Ausführungsform ist durch den Kanal ein vorgegebener Bereich des Bodenteils temperierbar und eine Fläche dieses Bereichs weist eine Größe auf, welche einen vorgegebenen Anteil eine Projektionsfläche aufweist, welche durch eine Projektion in der Längsrichtung des Bodenteils des größten Durchmessers einer in der Bodentasse beziehungsweise dem Bodenteil abgebildeten Kontur gebildet wird und dieser Anteil liegt zwischen 10 % und 80 %, bevorzugt zwischen 15 % und 70 % und besonders bevorzugt zwischen 20 % und 60 %.

Es wird daher derjenige Bereich des Bodenteils, der zum Ausbilden des Bodens dient, verglichen mit demjenigen Bereich des Bodenteils (insbesondere dem flächenmäßigen Bereich in einer Querschnittsfläche), welcher von der Kühlwirkung erfasst wird, beziehungsweise in dem die Kühl- oder Temperierwirkung auftritt. Damit ist es also möglich, dass im Vergleich zur gesamten Querschnittsfläche des Bodenteils lediglich ein relativ geringer Bereich gekühlt wird. Insbesondere kann es sich dabei um einen zentralen Bereich des Bodenteils handeln. Bevorzugt handelt es sich bei diesen besagten Flächen jeweils um rotationssymmetrische Flächen, welche rotationssymmetrisch bezüglich einer Längsrichtung des Bodenteils (und/oder einer Symmetrieachse des Bodenteils) sind.

Die vorliegende Erfindung ist weiterhin auf ein Bodenteil einer Blasform zum Umformen von Kunststoffvorformlingen zu Kunststoffbehältnissen gerichtet, welche eine Innenkontur aufweist oder ausbildet, welche einen Boden der Behältnisse ausformt, wobei dieses Bodenteil wenigstens einen Kanal zum Leiten eines Temperiermediums zum Temperieren des Bodenteils aufweist.

Erfindungsgemäß ist ein Verlauf des Kanals an einem Verlauf dieser Innenkontur angepasst und/oder der Kanal weist an seiner dem Temperiermedium zugewandten Innenoberfläche Strukturen und/oder Querschnittsveränderungen auf, welche die Strömung des Temperiermediums durch den Kanal hindurch beeinflussen. Bei diesen Strukturen kann es sich aber auch um Stege handeln, welche, ähnlich wie Kühlrippen eine (Strömungs-)Oberfläche vergrößern. Damit kann bevorzugt auch wie oben erwähnt die Kühlwirkung dieses Kanals oder des Bodenteils insbesondere auch lokal verändert werden.

Bei einer bevorzugten Ausführungsform ist das Bodenteil in der oben beschriebenen Weise ausgebildet. Die Erfindung ist weiterhin auf eine Form und insbesondere eine Blasform zum Umformen von Kunststoffvorformlingen zu Kunststoffbehältnissen mit einem Bodenteil der oben beschriebenen Art gerichtet. Bevorzugt weist diese Form auch noch wenigstens ein und bevorzugt zwei Seitenteile auf, welche gemeinsam mit dem Bodenteil den Hohlraum ausbildet, der zum Ausformen der Behältnisse geeignet ist.

Bei einer bevorzugten Ausgestaltung weist das Bodenteil wenigstens eine Temperaturerfassungseinrichtung auf, welche eine Temperatur insbesondere im Inneren des Bodenteils und insbesondere in der Umgebung des Kanals erfasst. Bevorzugt weist das Bodenteil mehrere Temperaturerfassungseinrichtungen zum Erfassen der Temperatur des Bodenteils auf.

Die vorliegende Erfindung ist weiterhin auf ein Verfahren zum Umformen von Kunststoffvorformlingen zu Kunststoffbehältnissen gerichtet, wobei mittels einer Umformungsstation die Kunststoffvorformlinge durch Beaufschlagung mit einem fließfähigen Medium und insbesondere einem gasförmigen zu den Kunststoffbehältnissen umgeformt werden und wobei die Umformungsstation eine Blasform aufweist, welche einen Hohlraum ausbildet, innerhalb dessen die Kunststoffvorformlinge zu den Kunststoffbehältnissen umgeformt werden und diese Blasform ein Bodenteil aufweist, welches wiederum eine Innenkontur aufweist, welche einen Boden der Behältnisse ausformt und wobei dieses Bodenteil wenigstens einen Kanal aufweist, durch welchen ein Temperiermedium zum Temperieren des Bodenteils geleitet wird.

Erfindungsgemäß ist ein Verlauf des Kanals an einem Verlauf der Innenkontur angepasst und/oder der Kanal weist an seiner Innenoberfläche Strukturen und/oder Querschnittsveränderungen auf, welche die Strömung des Temperiermediums durch diesen Kanal hindurch beeinflussen.

Bei einem weiteren bevorzugten Verfahren wird der Kühlmittelfluss beziehungsweise der Temperiermediumfluss durch die Kanäle wenigstens zeitweise gesteuert und/oder verändert. Bevorzugt wird der Fluss des Temperiermediums durch den Kanal auch in Abhängigkeit von einer Temperatur des Bodenteils gesteuert. Daneben käme auch eine Steuerung in Abhängigkeit von anderen Größen in Fragen, beispielsweise eine Steuerung in Abhängigkeit von einer Produktionsgeschwindigkeit.

Weitere Vorteile und Ausführungsformen ergeben sich aus den beigefügten Zeichnungen:
Darin zeigen:
- Fig. 1: eine grob schematische Darstellung einer Vorrichtung zum Umformen von Kunststoffvorformlingen zu Kunststoffbehältnissen;
- Fig. 2: eine Darstellung einer Umformungsstation;
- Fig. 3: eine Darstellung eines Bodenteils nach dem internen Stand der Technik der Anmelderin;
- Fig. 4: eine erste Darstellung eines erfindungsgemäßen Bodenteils;
- Fig. 5: eine weitere Darstellung eines erfindungsgemäßen Bodenteils;
- Fig. 6a, 6b: zwei Darstellungen zur Veranschaulichung eines erfindungsgemäßen Bodenteils;
- Fig. 7a bis 7c: drei Darstellungen eines mehrteiligen Bodenteils.

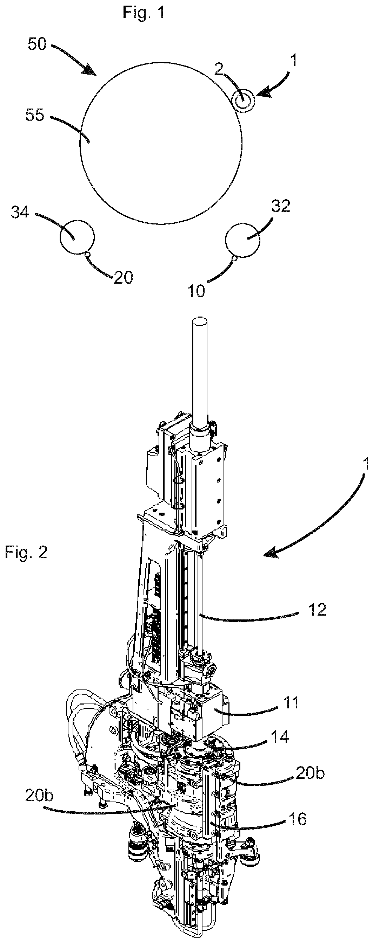

Figur 1 zeigt eine schematische Darstellung einer Vorrichtung 50 zum Umformen von Kunststoffvorformlinge 10 zu Kunststoffbehältnissen 20. Dabei werden mittels einer Zuführeinrichtung 32, wie etwa einem Zuführstern Kunststoffvorformlinge 10 Umformungsstationen 1 (nur eine dargestellt) zum Umformen zugeführt. Das Bezugszeichen 34 kennzeichnet eine Abführeinrichtung, wie etwa einen Abführstern, der die gefertigten Kunststoffbehältnisse von der Vorrichtung 50 abführt.

Diese Umformungsstationen 1 sind dabei an einem (insbesondere drehbaren)Träger 55 angeordnet. Die Umformungsstationen 1 weisen jeweils Blasformen 2 auf, welche zum Ausformen der Behältnisse 20 dienen.

Figur 2 zeigt eine Darstellung einer Umformungsstation 1 zum Umformen von Kunststoffvorformlingen zu Kunststoffbehältnissen. Diese weist zwei Blasformträger 20a und 20b auf, die bezüglich einander geschwenkt werden können, um Kunststoffvorformlinge in eine innenliegende Blasform (nicht gezeigt) einzugeben. Das Bezugszeichen 16 kennzeichnet einen Verriegelungsmechanismus, der die beiden Blasformträger 20a und 20b miteinander in einem geschlossenen Zustand verriegelt.

Das Bezugszeichen 14 kennzeichnet schematisch eine Beaufschlagungseinrichtung, welche von oben an den Mündungsrand des (nicht gezeigten) Kunststoffvorformlings fährt, um diesen zu expandieren. Das Bezugszeichen 11 kennzeichnet einen Blasblock, insbesondere eine Ventilanordnung, über welche die Blasdrücke gesteuert und geregelt werden können. Das Bezugszeichen 12 kennzeichnet eine Reckstange, welche in die (nicht gezeigten) Kunststoffvorformlinge einführbar ist, um diese in ihrer Längsrichtung zu dehnen.

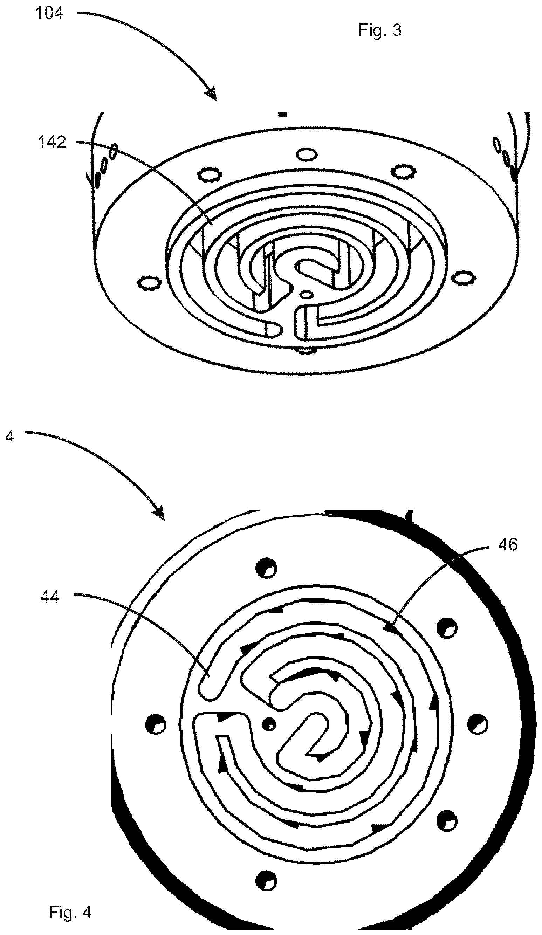

Figur 3 zeigt eine Darstellung eines Bodenteils 104 aus dem internen Stand der Technik der Anmelderin. Dieses weist einen spiralförmig ausgebildeten Kanal zum Leiten eines Temperiermediums auf. Dieser Kanal weist dabei eine einheitliche Höhe auf bzw. verläuft in zwei Ebenen und damit ändert sich auch sein Abstand dieses Kanals 142 zu der (nicht gezeigten) Innenkontur des Bodenteils.

Figur 4 zeigt eine schematische Darstellung eines erfindungsgemäßen Bodenteils 4. Auch hier ist wiederum ein Kanal 44 vorgesehen, der spiralförmig ausgebildet ist und hier circa zwei bis drei Umdrehungen aufweist. Dieser Kanal weist hier bevorzugt einen einheitlichen Querschnitt auf. Die Bezugszeichen 46 kennzeichnen Vorsprünge, die im Inneren dieses Kanals ausgebildet sind. Diese Vorsprünge 46 beziehungsweise Strukturen erzeugen in dem Temperiermedium, welches durch den Kanal 44 strömt, Turbulenzen, welche eine verbesserte Kühlwirkung in bestimmten Bereichen des Bodenteils 4 erzeugen.

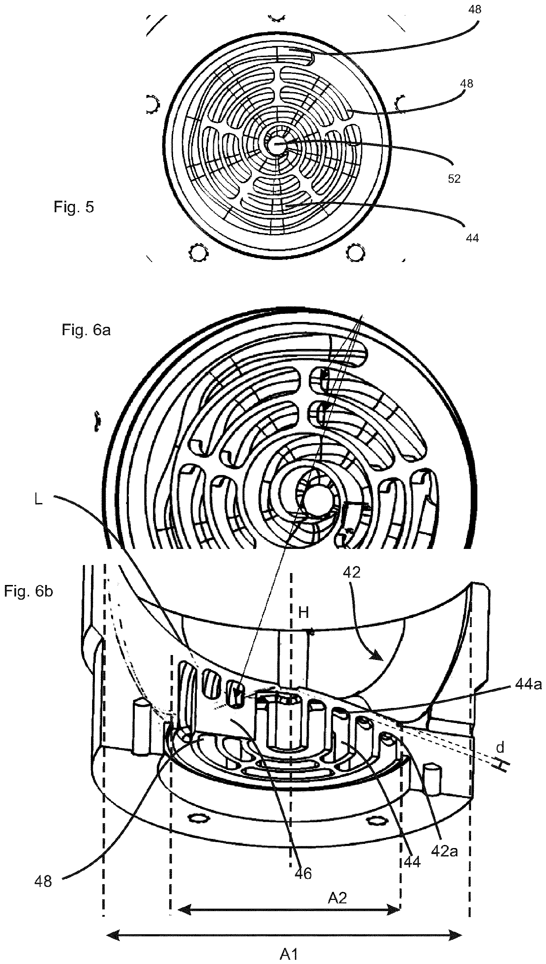

Figur 5 zeigt eine weitere Ansicht eines Bodenteils. Das Bezugszeichen 52 kennzeichnet einen Zufluss für das Temperiermedium.

Der Kanal bzw. die Nut ist hier -bezogen auf seine Tiefe- dem Bodendesign folgend ausgebildet, wie oben erwähnt. Im Bereich von Zugbändern wäre die Nut jedoch so tief geworden, dass die Strömungsgeschwindigkeit zu stark abnimmt. Daher wurden die Nuten an jenen Stellen unterbrochen und nur über einen tieferliegenden Durchbruch weiterhin miteinander verbunden.

So ist das Wasser gezwungen den Weg entlang des Nutgrundes zu folgen, was den Kühleffekt an diesen Stellen fördern bzw. aufrechterhalten soll. Die Stege kommen also bevorzugt nur an besonders tiefen Stellen zum Einsatz (insbesondere an den Zugbändern). Im konkreten Fall sind es also 5 Positionen, weil ein Petaloidboden auch genau 5 Zugbänder hat.

Die Figuren 6a und 6b zeigen eine Gegenüberstellung zur Veranschaulichung dieser Strukturen. Bei dieser Ausgestaltung sind Aussparungen 48 vorgesehen, welche zum Umlenken des Temperiermediums dienen. Man erkennt, dass (Vergleiche Figur 6a) die Kanäle 44 an die Innenkontur 42 des Bodenteils herangeführt sind. Dabei beziehen sich die Bezugszeichen 44a auf die Enden des jeweiligen Kanals, welche den kürzesten Abstand d zu der Innenkontur 42 aufweist. Die Innenkontur ist bevorzugt ein Negativ des zu herzustellenden Behältnisses.

Die Bezugszeichen 46 kennzeichnen Stege, welche in diese Kanäle hineinragen. Im Bereich dieser Stege weisen die Kanäle einen geringeren Querschnitt auf. Das Temperiermedium wird hier umgelenkt in darunterliegenden Nuten beziehungsweise den Aussparungen 48. Durch diese Umlenkung wird in bestimmten kritischen Bereichen eine verbesserte Temperier- und insbesondere Kühlwirkung erreicht. Wie aus Figur 6b erkennbar ist, handelt es sich hier beispielsweise um solche Bereiche, in denen das Bodenteil ein Zugband des Behältnisses ausbildet, das heißt entlang der in Figur 6b gezeigten Linie L. Das Bezugszeichen H kennzeichnet die Höhenrichtung (bezogen auf die Innenkontur 42) und damit auch die Längsrichtung des Bodenteils. Bevorzugt folgt der Kanal in dieser Höhenrichtung H der Innenkontur.

Das Bezugszeichen A1 kennzeichnet eine Projektionsfläche, welche sich ergibt, wenn die Innenkontur 42 in der Längsrichtung H des Bodenteils projiziert wird. Das Bezugszeichen A2 kennzeichnet eine Projektionsfläche, welche sich ergibt, wenn derjenige Bereich des Bodenteils, der temperiert wird und/oder derjenige Bereich, in dem der Kanal 44 vorhanden ist, in der Längsrichtung H des Bodenteils projiziert wird.

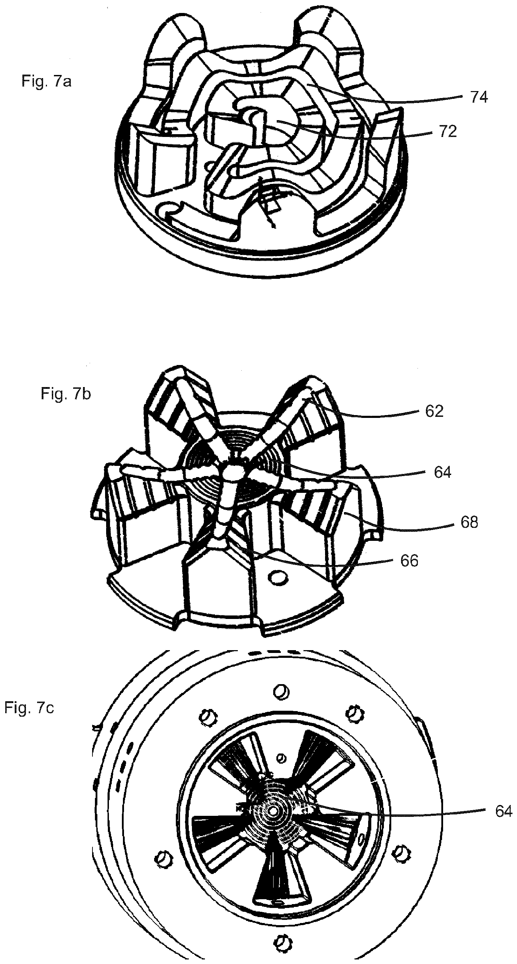

Die Figuren 7a bis 7c zeigen drei Darstellungen eines mehrteiligen beziehungsweise hier zweiteiligen Bodenteils.

Die Darstellungen der Figuren 7b und 7c gehört zusammen. Fig. 7b zeigt das Einlegeteil für Fig. 7c. Die Gegenstände der Fig. 7b und 7c erzeugen zusammen einen sternförmig verlaufenden Hohlraum, in welchem das Kühlmedium sich parallel in 5 Richtungen (radial) ausbreitet. Der Großteil der Strömung läuft hier über den mit Ziffer 62 beschriebenen "Kamm" hinauf zum höchsten Punkt des Einlegteils und von da in eine radial weiterführende Bohrung in der Bodentasse.

Die Bohrung kreuzt sich nach wenigen mm mit einer zweiten Bohrung, welche das Kühlmedium ca. 150° umlenkt und wieder zurück zum Einlegeteil schickt. Dort läuft sie an der Außenseite 68 der 5 Dome (diejenige Fläche, die aussieht wie die Giebelseite eines Hauses) nach unten und über einen darunterliegenden Sammelring (hier nicht sichtbar) wieder aus der Form heraus.

Parallel zu diesem 1. Strömungsweg, können auch links und rechts "des Weges" geringere Mengen Kühlmedium die Dome nach unten laufen (am Beispiel des Hauses, wären dass die Satteldachflächen und die Hauslängsseite) Auch dieses Wasser mündet wieder im Sammelring. Rillen und Riefen in beiden Teilen sollen künstlich die Oberfläche etwas vergrößern bzw. Fließwege begünstigen.

Bei der in Fig. 7a gezeigten Darstellung ist die Innenkontur gezeigt doch nicht eine der Fig. 7c entsprechende Darstellung.

Die Kühlung beginnt in der Mitte 72 und geht hier in einer echten Spiralform bis nach außen, wo das Wasser wieder aus der Form austritt. Wie auch beim Stand der Technik läuft das Wasser entlang einer Nut 74 in der Bodentasse. Diese Nut stellt in 3 Seiten die Begrenzung des Kanals (mit rechteckigem Querschnitt) dar. Auch hier wird die Tiefe nun variabel gehalten. Um an tiefen Stellen die Strömungsgeschwindigkeit aufrecht zu erhalten, bediente man sich wie bei Figur 5 den Trennstegen mit untenliegenden Durchbrüchen. Hier, in dieser Variante, verfolgt man das gleiche Ziel mit Hilfe eines Einlegeteils (Fig. 7a) Dieses verkörpert im eingelegten Zustand die vierte Seite des Kanals und gewährleistet absolut gleichbleibenden Strömungsquerschnitt entlang der gesamten Kühlstrecke.

## Patentansprüche

1. Umformungsvorrichtung (50) zum Umformen von Kunststoffvorformlingen (10) zu Kunststoffbehältnissen (20) mit wenigstens einer Umformungsstation, welche die Kunststoffvorformlinge (10) durch Beaufschlagung mit einem fließfähigen Medium zu den Kunststoffbehältnissen umformt, wobei die Umformungsstation eine Blasform (2) aufweist, welche einen Hohlraum ausbildet, innerhalb dessen die Kunststoffvorformlinge zu den Kunststoffbehältnissen ausformbar sind und diese Blasform ein Bodenteil (4) aufweist, welches eine Innenkontur (42) aufweist, welche einen Boden der Behältnisse ausformt, und wobei dieses Bodenteil (4) wenigstens einen Kanal (44) zum Leiten eines Temperiermediums zum Temperieren des Bodenteils aufweist,
**dadurch gekennzeichnet, dass**
ein Verlauf des Kanals (44) an einen Verlauf der Innenkontur (42) angepasst ist und der Kanal an seiner dem Temperiermedium zugewandten Innenoberfläche Strukturen und/oder oder Querschnittsveränderungen (46) aufweist, welche die Strömung des Temperiermediums durch den Kanal hindurch beeinflussen und wobei der Kanal (44) wenigstens abschnittsweise spiralförmig ausgebildet ist.

2. Umformungsvorrichtung (50) nach dem vorangegangenen Anspruch,
**dadurch gekennzeichnet, dass**
die Spirale mehr als eine Umdrehung und bevorzugt mehr als zwei Umdrehungen aufweist und/oder die Spirale weniger als zehn, bevorzugt weniger als acht, und bevorzugt weniger als sieben Umdrehungen ausbildet.

3. Umformungsvorrichtung (50) nach wenigstens einem der vorangegangenen Ansprüche,
**dadurch gekennzeichnet, dass**
der Kanal einen vorbestimmten Abstand zu der Innenkontur aufweist und ein Verlauf des Kanals in einer Höhenrichtung des Bodenteils wenigstens abschnittsweise an den Verlauf der Innenkontur (42) angepasst ist.

4. Umformungsvorrichtung (50) nach wenigstens einem der vorangegangenen Ansprüche,
**dadurch gekennzeichnet, dass**
der Kanal einen Abstand zu der Innenkontur (42) aufweist der kleiner ist als 10 mm und/oder der Kanal einen Abstand zu der Innenkontur (42) aufweist, der größer ist als 0,5 mm.

5. Umformungsvorrichtung (50) nach wenigstens einem der vorangegangenen Ansprüche,
**dadurch gekennzeichnet, dass**
die Strukturen als Vorsprünge und/oder Stege ausgebildet sind, welche in den Kanal reichen.

6. Umformungsvorrichtung (50) nach wenigstens einem der vorangegangenen Ansprüche,
**dadurch gekennzeichnet, dass**
der Kanal zumindest abschnittsweise Einschnürungen oder Verengungen aufweist.

7. Umformungsvorrichtung (50) nach wenigstens einem der vorangegangenen Ansprüche,
**dadurch gekennzeichnet, dass**
durch den Kanal ein vorgegebener Bereich des Bodenteils temperierbar ist und eine Fläche (A2) dieses Bereichs eine Größe aufweist, welche einen vorgegebenen Anteil einer Projektionsfläche (A1) aufweist, welche durch eine Projektion in einer Längsrichtung (L) des Bodenteils des größten Durchmessers einer in der Bodentasse abgebildeten Kontur gebildet wird und dieser Anteil zwischen 10 % und 80 %, bevorzugt zwischen 15 % und 70 % und besonders bevorzugt zwischen 20 % und 60 % liegt.

8. Bodenteil (4) einer Blasform zum Umformen von Kunststoffvorformlingen (10) zu Kunststoffbehältnissen (20) welches eine Innenkontur (42) aufweist, welche einen Boden der Behältnisse ausformt wobei dieses Bodenteil (4) wenigstens einen Kanal (44) zum Leiten eines Temperiermediums zum Temperieren des Bodenteils aufweist, **dadurch gekennzeichnet, dass**
ein Verlauf des Kanals (44) an einen Verlauf der Innenkontur (42) angepasst ist und der Kanal an seiner dem Temperiermedium zugewandten Innenoberfläche Strukturen und/oder oder Querschnittsveränderungen aufweist, welche die Strömung des Temperiermediums durch den Kanal hindurch beeinflussen und wobei der Kanal (44) wenigstens abschnittsweise spiralförmig ausgebildet ist.

9. Verfahren zum Umformen von Kunststoffvorformlingen (10) zu Kunststoffbehältnissen (20) wobei mittels einer Umformungsstation die Kunststoffvorformlinge (10) durch Beaufschlagung mit einem fließfähigen Medium zu den Kunststoffbehältnissen umgeformt werden, wobei die Umformungsstation eine Blasform (2) aufweist, welche einen Hohlraum ausbildet, innerhalb dessen die Kunststoffvorformlinge zu den Kunststoffbehältnissen umgeformt werden und diese Blasform ein Bodenteil (4) aufweist, welches eine Innenkontur (42) aufweist, welche einen Boden der Behältnisse ausformt, und wobei dieses Bodenteil (4) wenigstens einen Kanal (44) aufweist, durch welchen ein Temperiermedium zum Temperieren des Bodenteils geleitet wird,
**dadurch gekennzeichnet, dass**
ein Verlauf des Kanals (44) an einen Verlauf der Innenkontur (42) angepasst ist und der Kanal an seiner dem Temperiermedium zugewandten Innenoberfläche Strukturen und/oder oder Querschnittsveränderungen aufweist, welche die Strömung des Temperiermediums durch den Kanal hindurch beeinflussen und wobei der Kanal (44) wenigstens abschnittsweise spiralförmig ausgebildet ist.

## Claims

1. Forming apparatus (50) for forming plastic preforms (10) into plastic containers (20), having at least one forming station which forms the plastic preforms (10) into the plastic containers by being acted upon by a flowable medium, wherein the forming station having a blow mould (2) which forms a cavity within which the plastic preforms can be formed into the plastic containers, and this blow mould having a base part (4) which has an inner contour (42) which forms a base of the containers, and wherein this base part (4) has at least one channel (44) for conducting a temperature control medium for temperature control of the base part,
**characterized in that**
a course of the channel (44) is adapted to a course of the inner contour (42) and the channel has, on its inner surface facing the temperature control medium, structures and/or cross-sectional changes (46) which influence the flow of the temperature control medium through the channel and wherein the channel (44) is at least in sections spiral.

2. Forming apparatus (50) according to the preceding claim,
**characterized in that**
the spiral has more than one rotation and preferably more than two rotations and/or the spiral forms less than ten, preferably less than eight, and preferably less than seven rotations.

3. Forming apparatus (50) according to at least one of the preceding claims,
**characterized in that**
the channel has a predetermined distance to the inner contour and a course of the channel in a height direction of the base part is adapted at least in sections to the course of the inner contour (42).

4. Forming apparatus (50) according to at least one of the preceding claims,
**characterized in that**
the channel has a distance to the inner contour (42) which is smaller than 10 mm and/or the channel has a distance to the inner contour (42) which is larger than 0.5 mm.

5. Forming apparatus (50) according to at least one of the preceding claims, **characterized in that**
the structures are formed as protrusions and/or webs extending into the channel.

6. Forming apparatus (50) according to at least one of the preceding claims, **characterized in that**
the channel comprises constrictions or narrowings at least in sections.

7. Forming apparatus (50) according to at least one of the preceding claims, **characterized in that**
a predetermined region of the base part can be tempered by the channel and a surface (A2) of this region has a size which has a predetermined proportion of a projection surface (A1) which is formed by a projection in a longitudinal direction (L) of the base part of the largest diameter of a contour designed in the base cup and this proportion is between 10% and 80%, preferably between 15% and 70% and particularly preferably between 20% and 60%.

8. Base part (4) of a blow mould for forming plastic preforms (10) into plastic containers (20), which has an inner contour (42) which forms a base of the containers, wherein this base part (4) having at least one channel (44) for conducting a temperature control medium for temperature control of the base part,
**characterized in that**
a course of the channel (44) is adapted to a course of the inner contour (42) and the channel has structures and/or cross-sectional changes on its inner surface facing the temperature control medium which influence the flow of the temperature control medium through the channel and wherein the channel (44) is at least in sections spiral.

9. Method for forming plastic preforms (10) into plastic containers (20), wherein the plastic preforms (10) being formed into the plastic containers by the action of a flowable medium by means of a forming station, wherein the forming station having a blow mould (2) which forms a cavity within which the plastic preforms are formed into the plastic containers, and this blow mould having a base part (4) which has an inner contour (42) and which forms a base of the containers, and wherein this base part (4) having at least one channel (44) through which a temperature control medium for temperature control of the base part is passed,
**characterized in that**
a course of the channel (44) is adapted to a course of the inner contour (42) and the channel has, on its inner surface facing the temperature control medium, structures and/or cross-sectional changes which influence the flow of the temperature control medium through the channel and wherein the channel (44) is at least in sections spiral.

## Revendications

1. Dispositif de façonnage (50) pour le façonnage d'ébauches en matière plastique (10) en récipients en matière plastique (20) avec au moins un poste de façonnage qui façonne les ébauches en matière plastique (10) par alimentation en un milieu coulant en récipients en matière plastique, dans lequel le poste de façonnage présente un moule de soufflage (2) qui réalise un espace creux, à l'intérieur duquel les ébauches en matière plastique sont déformables en récipients en matière plastique et ce moule de soufflage présente une partie de fond (4) qui présente un contour intérieur (42) qui déforme un fond des récipients, et dans lequel cette partie de fond (4) présente au moins un canal (44) pour l'acheminement d'un milieu thermorégulé pour la régulation de température de la partie de fond,
**caractérisé en ce que**
une étendue du canal (44) est adaptée à une étendue du contour intérieur (42) et le canal au niveau de sa surface intérieure tournée vers le milieu thermorégulé présente des structures et/ou des modifications de section transversale (46) qui influencent le courant du milieu thermorégulé à travers le canal et dans lequel le canal (44) est réalisé au moins par sections en spirale.

2. Dispositif de façonnage (50) selon la revendication précédente,
**caractérisé en ce que**
la spirale présente plus d'un tour et de préférence plus de deux tours et/ou la spirale réalise moins de dix, de préférence moins de huit, et de préférence moins de sept tours.

3. Dispositif de façonnage (50) selon au moins l'une quelconque des revendications précédentes,
**caractérisé en ce que**
le canal présente une distance prédéterminée par rapport au contour intérieur et une étendue du canal dans un sens vertical de la partie de fond est adaptée au moins par sections à l'étendue du contour intérieur (42).

4. Dispositif de façonnage (50) selon au moins l'une quelconque des revendications précédentes,
**caractérisé en ce que**
le canal présente une distance par rapport au contour intérieur (42) qui est inférieure à 10 mm et/ou le canal présente une distance par rapport au contour intérieur (42) qui est supérieure à 0,5 mm.

5. Dispositif de façonnage (50) selon au moins l'une quelconque des revendications précédentes,
**caractérisé en ce que**
les structures sont réalisées comme saillies et/ou nervures qui parviennent dans le canal.

6. Dispositif de façonnage (50) selon au moins l'une quelconque des revendications précédentes,
**caractérisé en ce que**
le canal présente au moins par sections des étranglements ou rétrécissements.

7. Dispositif de façonnage (50) selon au moins l'une quelconque des revendications précédentes,
**caractérisé en ce que**
une zone prédéfinie de la partie de fond peut être thermorégulée par le canal et une surface (A2) de cette zone présente une grandeur qui présente une part prédéfinie d'une surface de projection (A1) qui est formée par une projection dans un sens longitudinal (L) de la partie de fond du diamètre le plus grand d'un contour illustré dans la tasse de fond et cette part se situe entre 10 % et 80 %, de préférence entre 15 % et 70 % et de manière particulièrement préférée entre 20 % et 60 %.

8. Partie de fond (4) d'un moule de soufflage pour le façonnage d'ébauches en matière plastique (10) en récipients en matière plastique (20) qui présente un contour intérieur (42) qui déforme un fond des récipients, dans laquelle cette partie de fond (4) présente au moins un canal (44) pour l'acheminement d'un milieu thermorégulé pour la régulation de température de la partie de fond,
**caractérisée en ce que**
une étendue du canal (44) est adaptée à une étendue du contour intérieur (42) et le canal présente au niveau de sa surface intérieure tournée vers le milieu thermorégulé des structures et/ou des modifications de section transversale qui influencent le courant du milieu thermorégulé à travers le canal et dans lequel le canal (44) est réalisé au moins par sections en spirale.

9. Procédé de façonnage d'ébauches en matière plastique (10) en récipients en matière plastique (20), dans lequel au moyen d'un poste de façonnage, les ébauches en matière plastique (10) sont façonnées par alimentation en un milieu coulant en récipients en matière plastique, dans lequel le poste de façonnage présente un moule de soufflage (2) qui réalise un espace creux, à l'intérieur duquel les ébauches en matière plastique sont façonnées en récipients en matière plastique et ce moule de soufflage présente une partie de fond (4) qui présente un contour intérieur (42) qui déforme un fond des récipients, et dans lequel cette partie de fond (4) présente au moins un canal (44) par lequel un milieu thermorégulé est acheminé pour la régulation de température de la partie de fond,
**caractérisé en ce que**
une étendue du canal (44) est adaptée à une étendue du contour intérieur (42) et le canal présente sur sa surface intérieure tournée vers le milieu thermorégulé des structures et/ou des modifications de section transversale qui influencent le courant du milieu thermorégulé à travers le canal et dans lequel le canal (44) est réalisé au moins par sections en spirale.
